# EUROPÄISCHE PATENTSCHRIFT

(11) **EP 3 013 508 B1**
(45) Veröffentlichungstag und Bekanntmachung des Hinweises auf die Patenterteilung: **15.04.2020**
(21) Anmeldenummer: 13736764.5
(22) Anmeldetag: 28.06.2013
(51) Int. Cl.: B23K 9/095, B23K 9/067, B23K 9/073, B23K 15/02, B23K 26/14, B23K 26/16, B23K 26/20, B23K 10/00

(54) **VERFAHREN ZUR MASCHINELLEN BEARBEITUNG, INSBESONDERE ZUR MASCHINELLEN SCHWEISSBEARBEITUNG UND STEUERVORRICHTUNG FÜR EINE EINSTELLEINRICHTUNG EINER PROZESSGASZUFUHR**
PROCESS FOR MACHINING, IN PARTICULAR FOR MECHANICAL WELDING, AND CONTROL APPARATUS FOR A SETTING DEVICE OF A PROCESS GAS FEED
PROCÉDÉ D'USINAGE MÉCANIQUE, NOTAMMENT DE SOUDAGE MÉCANIQUE, ET SYSTÈME DE COMMANDE D'UN DISPOSITIF DE RÉGLAGE DE L'ALIMENTATION EN GAZ DE TRAITEMENT

(43) Veröffentlichungstag der Anmeldung: 04.05.2016
(73) Patentinhaber: TRUMPF Laser- und Systemtechnik GmbH, 71254 Ditzingen (DE)
(72) Erfinder: PETOLILLO, Stefano, 71735 Eberdingen (DE); VEHLOW, Andreas, 71672 Marbach (DE)
(74) Vertreter: Kohler Schmid Möbus Patentanwälte
(86) Internationale Anmeldenummer: PCT/EP2013/001911
(87) Internationale Veröffentlichungsnummer: WO 2014/206432

(56) Entgegenhaltungen:
- WO-A1-2008/091160
- US-A- 4 023 006

## Beschreibung

Die Erfindung betrifft ein Verfahren zur maschinellen Bearbeitung, insbesondere zur maschinellen Schweißbearbeitung, von Werkstücken, insbesondere von plattenartigen Werkstücken, Rohren und/oder Profilen, mittels eines Laserstrahls. Die Werkstückbearbeitung erfolgt unter Relativbewegung des Laserstrahls und des Werkstückes, wobei der Bearbeitungsstelle zumindest ein Prozessgas in einer einstellbaren Prozessgasmenge pro Zeit zugeführt wird.

Des Weiteren betrifft die Erfindung eine Steuervorrichtung für eine Einstelleinrichtung der Prozessgaszufuhr einer Bearbeitungsstelle einer derartigen maschinellen Bearbeitung.

Prozessgas wird bei der Laserschweißbearbeitung der Bearbeitungsstelle z. B. mittels einer Gasdüse zugeführt. Das Prozessgas kann vor allem dazu dienen, die Bearbeitungsstelle vor der Umgebungsluft abzuschirmen. Beispielsweise wird dadurch verhindert, dass das durch den Laserstrahl aufgeschmolzene Material mit einer Umgebungsluft reagiert. Das Prozessgas bildet in diesem Fall folglich ein Schutzgas. Als Schutzgas wird ein inertes Gas z. B. Helium, Argon oder Kohlendioxid eingesetzt. Applikationsabhängig werden auch Prozessgasmischungen mit mehreren Prozessgasen eingesetzt.

Als Prozessgas kann der Bearbeitungsstelle aber auch ein Gas zugeführt werden, welches gezielt mit dem Werkstückmaterial reagiert und dadurch z. B. zusätzliche Energie in die Bearbeitungsstelle einbringt. In diesem Fall dient das Prozessgas als Arbeitsgas.

Des Weiteren kann ein Prozessgas zusätzlich oder ergänzend der Bearbeitungsstelle zugeführt werden, um Teile der Bearbeitungsanlage vor Emissionen von der Bearbeitungsstelle zu schützen. Bei der Laserbearbeitung werden solche Prozessgase z. B. zum Schutz optischer Elemente in der Nähe der Bearbeitungsstelle eingesetzt (Crossjet-Gas). Insgesamt nimmt die Prozessgaszufuhr, beispielweise auch die bewirkte Abfuhr der Emissionen, entscheidenden Einfluss auf den Bearbeitungsprozess und bestimmt maßgeblich die Qualität des Bearbeitungsergebnisses.

Durch die DE 38 27 451 C1 wird eine Vorrichtung zum Bearbeiten von Werkstücken mit einem Laserbearbeitungsstrahl beschrieben, die sich durch eine besonders dynamisch steuerbare Prozessgaszufuhr auszeichnet.

Aus der DE 38 24 048 A1 ist es daher bekannt, bei einem Verfahren zum Bearbeiten von Werkstücken mit einem Laserbearbeitungsstrahl, die zugeführte Prozessgasmenge pro Zeit auf Basis einer akustischen und optischen Überwachung der Bearbeitungszone zu regeln. Bei dem vorbekannten Verfahren wird auf hinterlegte Prozessdiagramme zugegriffen, anhand derer Sollwerte für die Prozessgaszufuhr bestimmt werden.

Ausgehend vom Stand der Technik hat sich die Erfindung zur Aufgabe gesetzt, ein Verfahren zum maschinellen Bearbeiten bzw. eine Steuervorrichtung für eine Einstelleinrichtung einer Prozessgaszufuhr bereitzustellen, die ohne Einbußen der Qualität des Bearbeitungsergebnisses und ohne aufwändige Regeleinrichtungen eine Reduktion des Verbrauchs eines Prozessgases ermöglichen.

Gelöst wird die Aufgabe durch ein Verfahren mit den Merkmalen von Anspruch 1 sowie durch eine Steuervorrichtung mit den Merkmalen von Anspruch 9. Verfahrensmäßig zeichnet sich die Erfindung dadurch aus, dass zu Beginn einer Werkstückbearbeitung eine Prozessgasmenge pro Zeit zugeführt wird, welche basierend auf einem ersten hinterlegten Vorgabewert eingestellt wird. Nach einer hinterlegten Stabilisierungszeit, in welcher eine Werkstückbearbeitung unter Relativbewegung des Laserstrahls und des Werkstückes fortgesetzt wird, wird die Prozessgasmenge pro Zeit automatisch reduziert. Dies erfolgt, indem eine Prozessgasmenge pro Zeit zugeführt wird, die basierend auf einem hinterlegten zweiten, kleineren Vorgabewert eingestellt wird.

Dank der automatischen Reduktion der zugeführten Prozessgasmenge pro Zeit nach einer vorbestimmten Stabilisierungszeit kann sich eine erhebliche Einsparung von Prozessgas ergeben. Der Erfindung liegt insofern die Erkenntnis zugrunde, dass bei einem kontinuierlichen Bearbeitungsprozess, bei welchem ein Laserstrahl relativ zu einem Werkstück bewegt wird, zu Beginn eine relativ hohe Prozessmenge benötigt wird. Nach einer Anfangszeit hat sich der Bearbeitungsprozess stabilisiert. Es hat sich eine gewisse Menge an Metallschmelze ausgebildet. Ein ausreichendes Gaspolster umgibt die Bearbeitungsstelle. Insgesamt haben sich stabile Gasströmungen usw. eingestellt. Zudem macht sich die Erfindung die Erkenntnis zu Nutze, dass diese Stabilisierungszeiten bei gleichartigen Bearbeitungen weitgehend übereinstimmen. Unter gleichartigen Bearbeitungen bzw. Applikationen sind Bearbeitungen zu verstehen, die im Wesentlichen die gleichen Prozessparameter aufweisen, welche z. B. Werkstückeigenschaften, Schweißnahtgeometrie, Bearbeitungsgeschwindigkeit, Düsengeometrie usw. umfassen. Aufwändige Überwachungs- und Regeleinrichtungen sind zum Erreichen einer signifikanten Prozessgaseinsparung nicht erforderlich. Die Vorgabewerte und die Stabilisierungszeit können durch Versuche ermittelt werden und für eine automatische Steuerung einer späteren Bearbeitung hinterlegt werden.

Die Vorgabewerte und Stabilisierungszeit können auf unterschiedliche Art und Weise hinterlegt sein. Sie können direkt als Werte hinterlegt sein, hinsichtlich der Prozessgasmenge pro Zeit beispielsweise in Form eines Volumenstrom- oder eines Massenstromwertes. Die Stabilisierungszeit kann als Zeitwert z. B. als eine Anzahl von Sekunden angegeben werden. Die Hinterlegung der Vorgabewerte und der Stabilisierungszeit kann aber auch indirekt erfolgen, indem Werte oder Diagramme hinterlegt werden, die mit diesen im Zusammenhang stehen. So kann der zweite Vorgabewert beispielsweise lediglich als Prozentsatz des ersten Vorgabewertes definiert sein. Die Stabilisierungszeit kann z. B. durch eine Bearbeitungstrecke angegeben werden, nach welcher die erfindungsgemäße Prozessgasreduktion erfolgt. Die Hinterlegung erfolgt insbesondere durch eine Speicherung auf einem Speichermedium, insbesondere als Teil eines Bearbeitungsprogramms oder als Verweis in einem Bearbeitungsprogramm, das zur Steuerung der Werkstückbearbeitung abgearbeitet wird.

Die Prozessgasmenge pro Zeit wird auf Basis der Vorgabewerte eingestellt. Insbesondere stellen die Vorgabewerte zeitabhängige Sollwerte für die Prozessgasmenge pro Zeit dar bzw. lassen sich direkt oder indirekt aus den Vorgabewerten Einstellwerte für die Einstelleinrichtung (Ventile) der Prozessgaszufuhr ableiten. Falls beispielsweise eine zusätzliche Prozessgasregelung auf Basis einer Prozessüberwachung erfolgt, können die Vorgabewerte insofern auch als Basiswerte dienen, von denen ausgehend eine weitere Einstellung durch die Prozessgasregelung erfolgt.

Bei einer bevorzugten Variante der Erfindung wird der Bearbeitungszone während der gesamten Stabilisierungszeit eine Prozessgasmenge pro Zeit zugeführt, welche basierend auf dem ersten Vorgabewert eingestellt wird. Durch die sich dadurch ergebende gleichbleibende Gasbeaufschlagung wird die Stabilisierung der Bearbeitungszone gefordert.

Ein besonders bevorzugtes Ausführungsbeispiel der Erfindung zeichnet sich dadurch aus, dass nach der Stabilisierungszeit die Prozessgasmenge pro Zeit, die der Bearbeitungszone zugeführt wird, über eine Übergangszeit hinweg allmählich von der auf dem ersten Vorgabewert basierenden Prozessgasmenge pro Zeit auf die auf dem zweiten Vorgabewert basierenden Prozessgasmenge pro Zeit reduziert wird. Dank der allmählichen Reduktion werden die sich über die Stabilisierungszeit eingestellten Verhältnisse nicht schlagartig verändert. Die Gefahr eines Strömungsabrisses mit negativen Einflüssen auf die Prozessstabilität und damit letztlich auf die Qualität des Bearbeitungsergebnisses wird erheblich reduziert.

In der Praxis bewährt, hat sich eine allmähliche Verminderung über eine Übergangszeit, die zwischen 20% und 60% der Stabilisierungszeit, vorzugsweise zwischen 30% und 50% der Stabilisierungszeit, beträgt.

Im Falle einer besonders bevorzugten Variante wird nach der Stabilisierungszeit die Prozessgasmenge pro Zeit, die der Bearbeitungszone zugeführt wird, basierend auf einer hinterlegten Rampenfunktion reduziert, d. h. die Reduktion erfolgt gemäß einer linearen Funktion. Es ergibt sich eine steuerungstechnisch einfach umzusetzende Variante. Derartige lineare Rampenfunktionen lassen sich in einem Bearbeitungsprogramm leicht abbilden. Gegebenenfalls kann auch auf eine in einer Steuerung eines Ventils hinterlegte Standardrampenfunktion zurückgegriffen werden.

Vorzugweise wird während der zumindest nahezu gesamten weiteren Schweißbearbeitung nach der Reduktion, d. h. bis der Laserstrahl 18 abgeschaltet wird, die zugeführte Prozessgasmenge pro Zeit auf Basis des zweiten Vorgabewertes eingestellt.

Eine besondere Kosteneinsparung ergibt sich bei einer vorteilhaften Variante der Erfindung, bei welcher das erfindungsgemäß gesteuerte Prozessgas zum Schutz der Bearbeitungsstelle vor der Umgebungsluft dient und das Prozessgas vorzugsweise Helium, Argon, Kohlendioxid und/oder Stickstoff ist. Es versteht sich, dass es auch von Vorteil sein kann, nicht nur ein Prozessgas, sondern eine Mischung, insbesondere aus mehreren der vorstehend genannten Prozessgasse, als Schutzgasmischung einzusetzen.

Bei einem bevorzugten Ausführungsbeispiel wird der Bearbeitungszone bei der Bearbeitung zumindest ein zweites Prozessgas mittels einer separaten Prozessgaszuführung zugeführt, wobei die zugeführte Prozessgasmenge pro Zeit des zweiten Prozessgases unabhängig von der Prozessgasmenge pro Zeit des ersten Prozessgases eingestellt wird. Insbesondere handelt es sich bei dem zweiten Prozessgas um ein Gas, das eine andere und/oder zusätzliche Funktion als das erste Prozessgas erfüllt. Im Speziellen handelt es sich z. B. um ein Arbeitsgas oder ein Crossjet-Gas. Die optimalen Mengen pro Zeit dieser Gase sind durch andere Verhältnisse bzw. Anforderungen bedingt, so dass eine separate Steuerung dieser Prozessgase bessere Bearbeitungsergebnisse mit sich bringt.

Für den Fall, dass mehrere Prozessgase bzw. eine Prozessgasmischung für dieselbe Funktion, z. B. als Schutzgase, insbesondere mit derselbe Prozessgaszuführung verwendet werden, kann bei einer bevorzugten Variante die Gesamtmenge pro Zeit der Prozessgasmischung, die der Bearbeitungszone zugeführt wird, nach der Stabilisierungszeit reduziert werden.

Es ist aber auch eine vorteilhafte Variante der Erfindung denkbar, bei welcher die Gesamtmenge pro Zeit der Prozessgasmischung nach der Stabilisierungszeit weitgehend schwächer abnimmt, unverändert bleibt oder sogar zunimmt. So kann beispielswiese nur die Menge pro Zeit eines Prozessgases nach der Stabilisierungszeit gemindert werden, während die Menge pro Zeit zumindest eines anderen Prozessgases derart steigt, dass die Gesamtmenge insgesamt weniger abnimmt, konstant bleibt oder sogar steigt. Der Vorteil an dieser Variante ist, dass die Strömungsverhältnisse unverändert bleiben oder zumindest unabhängig von der Reduktion eines einzelnen Prozessgases beeinflusst werden können. Letztlich ändert sich nach der Stabilisierungszeit bei dieser Variante automatisch die Zusammensetzung der Prozessgasmischung. Wenn es sich bei dem Prozessgas, dessen Menge pro Zeit reduziert wird, um ein teureres Prozessgas (z. B. Helium) handelt, bei dem anderen aber um ein billigeres, ergibt sich trotzdem eine erhebliche Kosteneinsparung.

Besonders vorteilhaft, ohne Einbußen der Qualität des Bearbeitungsergebnisses, wird die Erfindung bei einer Bearbeitung eingesetzt, bei welcher der Bearbeitungsstrahl während der Werkstückbearbeitung durchgängig auf das Werkstück einwirkt und eine im Wesentlichen gleichartige Bearbeitung durchführt, insbesondere eine zusammenhängende Schweißnaht erstellt wird.

Gemäß einem vorrichtungsmäßigen Aspekt der Erfindung sind in der Steuervorrichtung für eine Einstelleinrichtung der Prozessgaszufuhr einer Bearbeitungszone zumindest ein erster und ein zweiter, kleinerer Vorgabewert für die Prozessgasmenge pro Zeit, sowie eine Stabilisierungszeit hinterlegbar, insbesondere hinterlegt. Mittels der erfindungsgemäßem Steuervorrichtung ist die Einstelleinrichtung derart steuerbar, dass zu Bearbeitungsbeginn die zugeführte Prozessgasmenge pro Zeit basierend auf dem ersten Vorgabewert eingestellt wird und nach der Stabilisierungszeit, während derer eine Werkstückbearbeitung unter Relativbewegung des Laserstrahls und des Werkstückes erfolgt, die Prozessgasmenge pro Zeit basierend auf dem zweiten Vorgabewert eingestellt wird.

Die Einstellung der Prozessgasmenge pro Zeit erfolgt vorzugsweise mittels einer Ventileinheit, insbesondere mittels eines Proportional-MengenSteuerventils, das mit der Steuervorrichtung z. B. über ein Bus-System verbunden ist. Gegebenenfalls weist die Ventileinheit auch selbst Teile der Steuervorrichtung auf, z. B. Speichermittel, in denen Funktionen, wie Rampenfunktionen zur Änderung der Prozessgasmenge pro Zeit, hinterlegt sind.

Gemäß einem weiteren Aspekt der Erfindung ist eine Anlage zur maschinellen Bearbeitung, insbesondere einer maschinellen Schweißbearbeitung, von Werkstücken, insbesondere von plattenartigen Werkstücken, Rohren und/oder Profilen, mittels eines thermischen Bearbeitungsstrahls, mittels eines Laserstrahls, mit einer erfindungsgemäßen Steuervorrichtung versehen. Vorzugsweise ist diese in eine numerische Anlagensteuerung integriert.

Des Weiteren kann sich die Erfindung vorteilhafterweise in einem Bearbeitungsprogramm zum Betreiben einer solchen Anlage niederschlagen. So weist ein erfindungsgemäßes Bearbeitungsprogramm Steuerbefehle für die Einstelleinrichtung der Prozessgaszufuhr auf, welche bewirken, dass ein erfindungsgemäßes Verfahren durchgeführt wird, wenn das Bearbeitungsprogramm auf einer numerischen Anlagensteuerung abläuft. Schließlich kann sich die Erfindung in einem Computerprogrammprodukt niederschlagen, welches Kodierungsmittel aufweist, die zum Durchführen eines Verfahrens zum Erstellen eines solchen Bearbeitungsprogramms angepasst sind, wenn das Computerprogrammprodukt auf einer Datenverarbeitungsanlage betrieben wird. Das Computerprogrammprodukt weist ein lauffähiges Computerprogramm in Form eines Programmiersystems auf, das insbesondere eine automatische Eingabe- und/oder Auswahlmöglichkeit für die ersten und zweiten Vorgabewerte sowie für die Stabilisierungszeiten bietet.

Vorzugsweise liefert das Programmiersystem auf Basis einer Technologiedatenbank Vorschläge für die Vorgabewerte und die Stabilisierungszeit in Abhängigkeit der Applikation bzw. Bearbeitung, welche durch weitere Prozessparameter definiert wird. Im Speziellen kann ein Bediener die Vorschläge annehmen oder abwandeln. Das Programmiersystem kann auch eine Eingabemöglichkeit aufweisen, in der generell eine Bearbeitung im Prozess-Sparmodus oder eine Bearbeitung ohne die erfindungsgemäße Prozessgasreduktion wählbar ist.

Im Folgenden wird die Erfindung anhand schematischer Zeichnungen erläutert. Im Einzelnen zeigen:
- **Figur 1**:: eine Anlage zur maschinellen Schweißbearbeitung von Werkstücken mittels eines Laserstrahls,
- **Figur 2**:: die Bearbeitungszone und ein System zur Prozessgaszufuhr der Anlage aus Figur 1 und
- **Figur 3**:: ein Diagramm der Prozessgasmenge pro Zeit, die der Bearbeitungszone zugeführt wird, als Funktion der Bearbeitungszeit.

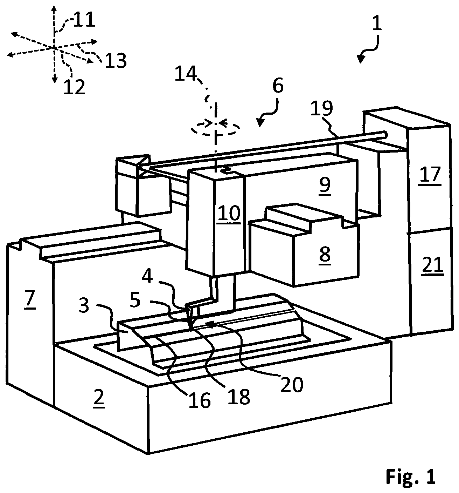

Gemäß Figur 1 weist die Anlage 1 zur Laserschweißbearbeitung von insbesondere Metallwerkstücken, eine Werkstückauflagetisch 2 zur Lagerung eines Werkstückes **3** während der Bearbeitung, einen Laserbearbeitungskopf **4** mit einer Laserbearbeitungsdüse **5** sowie eine Bewegungseinheit **6** zum Bewegen der Laserbearbeitungsdüse 5 relativ zu dem Werkstück 3 auf.

Die Bewegungseinheit 6 ist an einem Maschinengrundkörper **7** vorgesehen und umfasst drei linear verschiebbare Bewegungsschlitten **8, 9, 10,** mittels derer der Laserbearbeitungskopf 4 um drei senkrecht verlaufende Bewegungsachsen **11, 12, 13** bewegbar ist. An dem Schlitten 10 ist der Laserbearbeitungskopf 4 um eine vertikale Antriebsachse **14** drehbar und um eine nicht gezeigte, horizontale Schwenkachse schwenkbar. Mittels der Bewegungseinheit 6 kann der Laserbearbeitungskopf 4 bzw. die Laserbearbeitungsdüse 5 relativ frei einem nahezu beliebigen Verlauf einer herzustellenden Schweißnaht **16** entlang des Werkstückes 3 folgen.

An dem Maschinengrundkörper 7 ist seitliche eine Versorgungseinheit **17** angeordnet. Die Versorgungseinheit 17 umfasst u. a. einen Laserresonator sowie zumindest teilweise ein System zur Prozessgasversorgung (nicht gezeigt). Der im Laserresonator erzeugte Laserbearbeitungsstrahl **18** und die Prozessgase werden über Strahlführungs- und Versorgungsleitungen **19** der Bearbeitungszone **20** zugeführt. Unterhalb der Versorgungseinheit 17 ist beispielhaft die numerische Anlagensteuerung **21** dargestellt, welche zur Steuerung der Anlage 1 dient.

Die gezeigte Ausbildung der Anlage 1, insbesondere die Ausbildung der Maschinenachsen sowie die räumliche Anordnung der Versorgungseinheit 17 und der Anlagensteuerung 21 haben lediglich beispielhaften Charakter. Vielfältige Abwandlungen sind denkbar.

In Figur 1 ist die Anlage 1 während der Bearbeitung des Werkstückes 3 gezeigt. An dem Werkstück 3 wird mittels des Laserstrahls 18 eine Schweißnaht 16 erstellt. Der Laserstrahl 18 wird mittels der Bewegungseinheit 6 entlang der Bewegungsachse 13 relativ zu dem Werkstück 3 bewegt. In einem kontinuierlichen Prozess - ohne zwischenzeitliches Abschalten oder Stoppen des Laserstrahls 18, wird eine zusammenhängende Schweißnaht 16 erstellt. Gemäß Figur 1 ist ein erster Abschnitt der Schweißnaht 16 bereits erstellt.

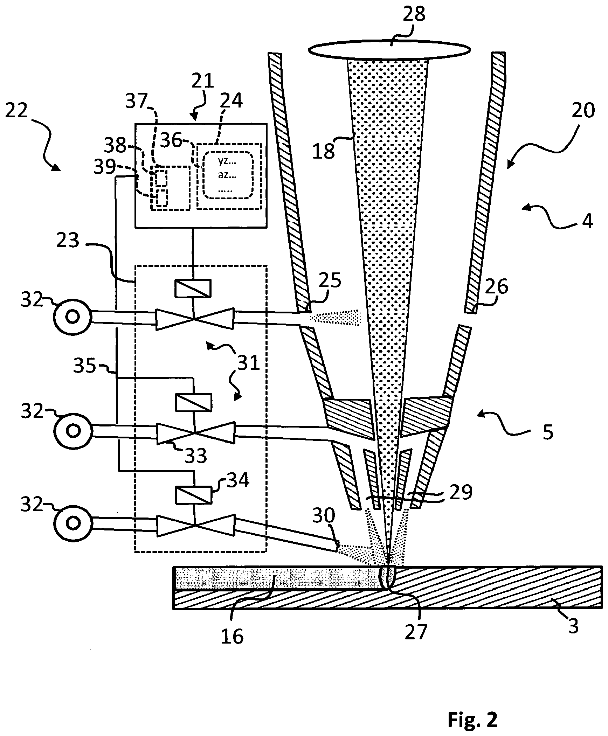

In Figur 2 ist die Bearbeitungszone 20 der Anlage 1 mit einem Ausschnitt des Laserbearbeitungskopfes 4 gezeigt. Außerdem ist in stark schematischer Weise das System zur Prozessgaszufuhr **22** einschließlich der Einstelleinrichtung **23** für die Prozessgaszufuhr und der zugehörige Steuervorrichtung **24** dargestellt.

Aus Figur 2 ist ersichtlich, dass der Bearbeitungszone 20 auf drei unterschiedlichen Wegen Prozessgas zuführbar ist. Mittels einer Crossjet-Düse **25** kann ein Prozessgas quer zum Verlauf des Laserstrahls 18 einströmen und über eine nur angedeutete Austrittöffnung **26** wieder austreten. Durch das Crossjet-Gas wird verhindert, dass Emissionen von der Bearbeitungsstelle **27,** an welcher der Laserstrahl 18 auf das Werkstück 3 trifft, zu einer in Figur 2 weiter oben gezeigten Fokussieroptik in Form einer Linse **28** gelangen kann.

Eine weitere Prozessgaszuführung erfolgt über Prozessgaskanäle **29** in der Laserbearbeitungsdüse 5. Das über die Kanäle 29 zugeführte Prozessgas strömt im Wesentlichen koaxial zum Laserstrahl 18 der Bearbeitungsstelle 27 zu. Über diese Zuführung wird beispielsweise ein Arbeitsgas, wie Luft, zugeführt.

Schließlich erfolgt eine weitere Prozessgaszuführung mittels einer seitlich angeordneten Gasdüse **30,** die auf die Bearbeitungsstelle 27 gerichtet ist. Das auf diese Weise zugeführte Prozessgas oder die auf diese Weise zugeführte Prozessgasmischung dient als Schutzgas. Die Bearbeitungsstelle 27 wird durch das Prozessgas wirkungsvoll von der Umgebungsluft abgeschirmt. Als Schutzgas wird beispielsweise Helium, Argon, Stickstoff oder Kohlendioxid oder eine Mischung aus mehreren dieser Gase verwendet.

Zum Einstellen der jeweiligen Prozessgasmengen pro Zeit, die der Bearbeitungszone zugeführt werden, sind die Düsen 25, 30 bzw. Kanäle 29 jeweils über eine Proportionalmengen-Steuerventileinheit **31** mit einer jeweiligen Gasquelle **32** verbunden. Die Proportionalmengen-Steuerventileinheiten 31 umfassen jeweils ein Proportionalmengen-Steuerventil **33** und eine Steuereinheit **34,** über welche das Proportionalmengen-Steuerventil 33 von der zentralen Anlagensteuerung 21 angesteuert werden kann. In den Steuereinheiten 34 sind (Standard-)Steuerfunktionen, insbesondere eine Rampenfunktion für die Änderungen der Prozessgasmenge pro Zeit, hinterlegt. Die Steuereinheiten 34 sind im Speziellen über ein Bussystem 35 mit der zentralen Anlagensteuerung 21 verbunden. Die Proportionalmengen-Steuerventileinheiten **31** sind beispielsweise Teil der Versorgungseinheit 17.

Auf der Anlagensteuerung 21 ist ein Bearbeitungsprogramm **36** vorgesehen, das zur Durchführung der Schweißbearbeitung abgearbeitet wird. Das Bearbeitungsprogramm 36 umfasst Steuerbefehle, die insbesondere die Prozessgasmenge pro Zeit, die der Bearbeitungszone zugeführt wird, bestimmen. In diesem Sinne ist die Steuervorrichtung 24 der Einstelleinrichtung 23 der Prozessgaszufuhr weitgehend in der numerischen Anlagensteuerung 21 integriert.

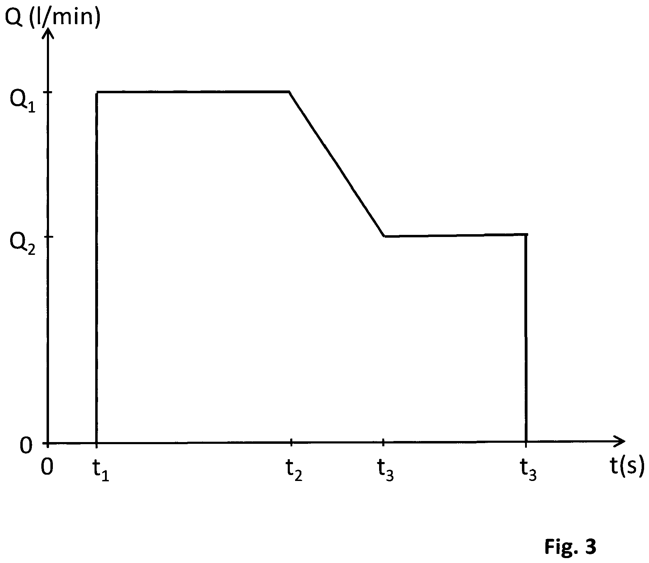

Im Speziellen sind durch das Bearbeitungsprogramm 36 in der Steuervorrichtung 24 bzw. der Anlagensteuerung 21 eine Stabilisierungszeit sowie ein erster und ein zweiter, kleinerer Vorgabewert für die Prozessgasmenge pro Zeit hinterlegt, die mittels der seitlichen Gasdüse 30 als Schutzgas der Bearbeitungszone 20 zugeführt werden sollen. Basierend auf den Vorgabewerten und der Stabilisierungszeit erfolgt eine Steuerung des der Gasdüse 30 zugeordneten Proportionalmengen-Ventils 33, dass sich ein Verlauf der Prozessgasmenge pro Zeit ergibt, der in Figur 3 beispielhaft dargestellt ist.

Zu Beginn der Bearbeitung (t₁) ist die Laserbearbeitungsdüse 5 über einer Anfangsstelle der zu erzeugenden Schweißnaht 16 positioniert. Der Laserstrahl 18 wird eingeschaltet. Zumindest nahezu gleichzeitig wird die Schutzgaszufuhr gestartet. Es wird eine Schutzgasmenge pro Zeit (Q₁) zugeführt, die basierend auf dem ersten Vorgabewert eingestellt wird. Die Schutzgasmenge pro Zeit beträgt beispielsweise 17 l/min.

Nun wird ein erster Schweißnahtabschnitt an dem Werkstück 3 erzeugt, indem der Laserstrahl 18 entlang des Werkstückes 3 bewegt wird, bis die vorgegebene Stabilisierungszeit beendet ist (t2). Vom Beginn (t₁) der Bearbeitung bis zum Erreichen der Stabilisierungszeit vergehen z. B. 5 bis 6 s.

Ohne dass der Laserstrahl 18 seine Relativbewegung gegenüber dem Werkstück 3 stoppt bzw. der Laserstrahl 18 ausgeschaltet wird, wird ab diesem Zeitpunkt die Prozessgasmenge pro Zeit allmählich über eine Übergangzeit hinweg reduziert. Die Übergangzeit endet (t₃), wenn die Prozessgasmenge pro Zeit (Q₂) basierend auf dem zweiten Vorgabewert eingestellt wird. Sie beträgt dann beispielsweise nur noch 10 l/min. Die Prozessgasmenge pro kann demnach z. B. um 40 % reduziert werden. Die Übergangzeit dauert beispielsweise 3s, also zwischen 30 % bis 50 % der Stabilisierungszeit.

Die gesamte weitere Schweißbearbeitung wird mit der reduzierten Prozessgasmenge pro Zeit (Q₂) durchgeführt. Am Ende der Schweißbearbeitung (t₃) wird der Laserstrahl abgeschaltet und die Prozessgaszufuhr gestoppt. Die Zeitspanne, während derer die reduzierte Prozessgasmenge (Q₂) pro Zeit zugeführt wird, ist vor allem von der Länge der Schweißnaht 16 abhängig. Nach Abschluss der Schweißbearbeitung kann eine weitere Schweißbearbeitung an einer anderen Stelle des Werkstückes 3 erfolgen und die oben beschriebenen Abläufe wiederholen sich.

Wenn über die Gasdüse 30 eine Schutzgasmischung zugeführt wird, kann die Gesamtgasmenge pro Zeit der Schutzgasmischung in analoger Weise gesteuert werden. Außerdem sei erwähnt, dass während des erläuterten Bearbeitungsverfahrens beispielsweise keine oder eine unabhängig gesteuerte Arbeitsgasmenge pro Zeit und/oder keine oder eine unabhängig gesteuerte Crossjet-Gasmenge pro Zeit der Bearbeitungszone 20 zugeführt werden kann.

Auf der numerischen Anlagensteuerung 21 ist zudem ein Programmiersystem 37 in Form eines Computerprogrammprodukts vorgesehen, welches Kodierungsmittel aufweist, die zum Durchführen eines Verfahrens zum Erstellen eines Bearbeitungsprogramms 36 angepasst sind, wenn das Computerprogrammprodukt auf der numerischen Anlagensteuerung 21 betrieben wird.

Das Computerprogrammprodukt kann aber auch auf einer separaten Datenverarbeitungsanlage betrieben werden und das damit erstellte Bearbeitungsprogramm 36 anschließend an die Anlagensteuerung 21 übermittelt werden.

Das Programmiersystem 37 weist eine automatische Eingabe- und/oder Auswahlmöglichkeit **38** für die ersten und zweiten Vorgabewerte sowie für die Stabilisierungszeit auf. Insbesondere umfasst das Programmiersystem 37 zudem eine Technologiedatenbank **39,** in welcher Vorschläge für Vorgabewerte und Stabilisierungszeiten für unterschiedliche Applikationen hinterlegt sind. Der Bediener kann die Vorschläge annehmen oder abwandeln. Mittels der Eingabe- und/oder Auswahlmöglichkeit **38** kann auch vorab zwischen einer Bearbeitung im Prozess-Sparmodus oder einer Bearbeitung ohne die automatische Prozessgasreduktion gewählt werden.

## Patentansprüche

1. Verfahren zur maschinellen Bearbeitung, insbesondere zur maschinellen Schweißbearbeitung, von Werkstücken, insbesondere von plattenartigen Werkstücken, Rohren und/oder Profilen, mittels eines Laserstrahls (18), bei welchem eine Werkstückbearbeitung unter Relativbewegung des Laserstrahls (18) und des Werkstückes (3) erfolgt, wobei einer Bearbeitungsstelle (27) ein Prozessgas, insbesondere ein Prozessgas zum Schutz der Bearbeitungsstelle (27) vor der Umgebungsluft, in einer einstellbaren Prozessgasmenge pro Zeit zugeführt wird, **dadurch gekennzeichnet, dass** zu Bearbeitungsbeginn der Bearbeitungsstelle (27) eine Prozessgasmenge pro Zeit zugeführt wird, welche auf einen hinterlegten ersten Vorgabewert (Q1) eingestellt wird, und nach einer hinterlegten Stabilisierungszeit, in welcher die Werkstückbearbeitung unter Relativbewegung des Laserstrahls (18) und des Werkstückes (3) fortgesetzt wird, eine Prozessgasmenge pro Zeit zugeführt wird, welche auf einen hinterlegten zweiten Vorgabewert (Q2) eingestellt wird, wobei der zweite Vorgabewert (Q2) kleiner als der erste Vorgabewert (Q1) ist.

2. Verfahren nach Anspruch 1, **dadurch gekennzeichnet, dass** der Bearbeitungsstelle (27) während der gesamten Stabilisierungszeit eine Prozessgasmenge pro Zeit zugeführt wird, welche auf dem ersten Vorgabewert (Q1) eingestellt wird.

3. Verfahren nach einem der vorigen Ansprüche, **dadurch gekennzeichnet, dass** nach der Stabilisierungszeit die Prozessgasmenge pro Zeit, die der Bearbeitungsstelle (27) zugeführt wird, über eine Übergangszeit hinweg allmählich von dem ersten Vorgabewert (Q1) auf den zweiten Vorgabewert (Q2) reduziert wird, wobei die Übergangszeit vorzugsweise zwischen 20% und 60% der Stabilisierungszeit, insbesondere zwischen 30% und 50% der Stabilisierungszeit, beträgt.

4. Verfahren nach einem der vorigen Ansprüche, **dadurch gekennzeichnet, dass** nach der Stabilisierungszeit die Prozessgasmenge pro Zeit, die der Bearbeitungsstelle (27) zugeführt wird, basierend auf einer hinterlegten Rampenfunktion reduziert wird.

5. Verfahren nach einem der vorigen Ansprüche, **dadurch gekennzeichnet, dass** das Prozessgas Helium, Argon, Kohlendioxid und/oder Stickstoff ist.

6. Verfahren nach einem der vorigen Ansprüche, **dadurch gekennzeichnet, dass** zumindest ein zweites Prozessgas der Bearbeitungsstelle (27) zugeführt wird, wobei die zugeführte Prozessgasmenge pro Zeit des zweiten Prozessgases separat von der Prozessgasmenge pro Zeit des ersten Prozessgases eingestellt wird.

7. Verfahren nach einem der vorigen Ansprüche, **dadurch gekennzeichnet, dass** das Prozessgas zusammen mit einem oder mehreren anderen Prozessgasen in Form einer Prozessgasmischung der Bearbeitungsstelle (27) zum Schutz der Bearbeitungsstelle (27) vor der Umgebungsluft zugeführt wird, und nach der Stabilisierungszeit die Gesamtprozessgasmenge pro Zeit der Prozessgasmischung basierend auf dem ersten und zweiten Vorgabewert (Q1, Q2) reduziert wird.

8. Verfahren nach einem der vorigen Ansprüche, **dadurch gekennzeichnet, dass** der Laserstrahl (18) während der Werkstückbearbeitung durchgängig auf das Werkstück (3) einwirkt und eine im Wesentlichen gleichartige Bearbeitung durchführt, insbesondere eine zusammenhängende Schweißnaht (16) erstellt wird.

9. Steuervorrichtung (24) zum Steuern einer Einstelleinrichtung (23), welche bei einer maschinellen Bearbeitung von Werkstücken mittels eines Laserstrahls (18) ein Prozessgas einer Bearbeitungsstelle (27) zuführt, wobei eine Werkstückbearbeitung unter Relativbewegung des Laserstrahls (18) und des Werkstückes (3) erfolgt, **dadurch gekennzeichnet, dass** in der Steuervorrichtung (24) zumindest ein erster und ein zweiter, kleinerer Vorgabewert (Q1, Q2) für die Prozessgasmenge pro Zeit, sowie eine Stabilisierungszeit hinterlegt sind, und dass mittels der Steuervorrichtung (24) die Einstelleinrichtung (23) derart gesteuert ist, dass zu Bearbeitungsbeginn die zugeführte Prozessgasmenge pro Zeit auf den ersten Vorgabewert (Q1) eingestellt wird und nach der Stabilisierungszeit, während derer eine Werkstückbearbeitung unter Relativbewegung des Laserstrahls (18) und des Werkstückes (3) fortgesetzt wird, die Prozessgasmenge pro Zeit auf den zweiten Vorgabewert (Q2) eingestellt wird.

10. Anlage (1) zur maschinellen Bearbeitung von Werkstücken mittels eines Laserstrahls (18), mit einer Steuervorrichtung (24) nach Anspruch 9.

11. Bearbeitungsprogramm (29) zum Ansteuern einer Steuervorrichtung (24) nach Anspruch 9, **dadurch gekennzeichnet, dass** das Bearbeitungsprogramm (29) Steuerbefehle für die Einstelleinrichtung (23) der Prozessgaszufuhr umfasst, welche bewirken, dass ein Verfahren nach einem der Ansprüche 1 bis 8 durchgeführt wird, wenn das Bearbeitungsprogramm (29) auf einer numerischen Anlagensteuerung (21) abläuft.

12. Computerprogrammprodukt (37), welches Kodierungsmittel aufweist, die zum Durchführen eines Verfahrens nach einem der Ansprüche 1 bis 8 angepasst sind, wenn das Computerprogrammprodukt (37) auf einer Datenverarbeitungsanlage betrieben wird.

## Claims

1. Method for machine processing, in particular for machine welding processing, of workpieces, in particular of plate-like workpieces, tubes and/or profiles, by means of a laser beam (18), wherein the processing of a workpiece is carried out with a relative movement between the laser beam (18) and the workpiece (3), wherein a process gas, in particular a process gas that serves to protect the processing point (27) from the ambient air, is fed to a processing point (27) in a settable quantity of process gas per unit of time, **characterised in that**, at the start of processing, a quantity of process gas per unit of time which is set to a stored first specified value (Q₁) is fed to the processing point (27), and, after a stored stabilisation time, in which the processing of the workpiece is continued with a relative movement between the laser beam (18) and the workpiece (3), a quantity of process gas per unit of time which is set to a stored second specified value (Q₂) is fed, wherein the second specified value (Q₂) is smaller than the first specified value (Q₁).

2. Method according to claim 1, **characterised in that** a quantity of process gas per unit of time which is set to the first specified value (Q₁) is fed to the processing point (27) during the entire stabilisation time.

3. Method according to one of the preceding claims, **characterised in that**, after the stabilisation time, the quantity of process gas per unit of time fed to the processing point (27) is reduced gradually during a transitional period from the first specified value (Q₁) to the second specified value (Q₂), wherein the transitional period is preferably between 20% and 60% of the stabilisation time, in particular between 30% and 50% of the stabilisation time.

4. Method according to one of the preceding claims, **characterised in that**, after the stabilisation time, the quantity of process gas per unit of time fed to the processing point (27) is reduced based on a stored ramp function.

5. Method according to one of the preceding claims, **characterised in that** the process gas is helium, argon, carbon dioxide and/or nitrogen.

6. Method according to one of the preceding claims, **characterised in that** at least one second process gas is fed to the processing point (27), wherein the quantity of fed process gas per unit of time of the second process gas is set separately from the quantity of process gas per unit of time of the first process gas.

7. Method according to one of the preceding claims, **characterised in that** the process gas together with one or more other process gases in the form of a process gas mixture are fed to the processing point (27) to protect the processing point (27) from the ambient air, and, after the stabilisation time, the total quantity of process gas per unit of time of the process gas mixture is reduced based on the first and second specified value (Q₁, Q₂).

8. Method according to one of the preceding claims, **characterised in that** the laser beam (18) acts continuously on the workpiece (3) as it is being processed and performs an operation of essentially the same kind, in particular a continuous weld seam (16).

9. Control apparatus (24) for controlling a setting device (23), which feeds a process gas to a processing point (27) during machine processing of workpieces by means of a laser beam (18), wherein the processing of a workpiece is carried out with a relative movement between the laser beam (18) and the workpiece (3), **characterised in that**, in the control apparatus (24), at least one first and one second, smaller specified value (Q₁, Q₂) for the quantity of process gas per unit of time, and a stabilisation time are stored, and that, by means of the control apparatus (24), the setting device (23) is controlled such that, at the start of the processing, the quantity of fed process gas per unit of time is set to the first specified value (Q₁) and, after the stabilisation time, during which processing of the workpiece continues with a relative movement between the laser beam (18) and the workpiece (3), the quantity of process gas per unit of time is set to the second specified value (Q₂).

10. System (1) for the machine processing of workpieces by means of a laser beam (18), comprising a control apparatus (24) according to claim 9.

11. Processing program (29) for controlling a control apparatus (24) according to claim 9, **characterised in that** the processing program (29) comprises control commands for the setting device (23) of the process gas feed which ensure that a method according to one of the claims 1 to 8 is performed when the processing program (29) runs on a numerical machine control (21).

12. Computer program product (37) which has encoding means adapted to perform a method according to one of the claims 1 to 8, when the computer program product (37) is operated on a data processing system.

## Revendications

1. Procédé d'usinage mécanique et en particulier d'usinage mécanique par soudage, au moyen d'un faisceau laser (18), de pièces et notamment de pièces du type plaques, de tubes et/ou de profilés, dans lequel un usinage de pièce s'opère par mouvement relatif dudit faisceau laser (18) et de ladite pièce (3), avec délivrance à une zone d'usinage (27), en une quantité réglable par unité de temps, d'un gaz de traitement et notamment d'un gaz de traitement dédié à la protection de ladite zone d'usinage (27) vis-à-vis de l'air environnant, **caractérisé par** la délivrance à la zone d'usinage (27), au début de l'usinage, d'une quantité de gaz de traitement par unité de temps qui est réglée sur une première valeur prédéfinie (Q1) stockée en mémoire, et par la délivrance, après une période de stabilisation mémorisée durant laquelle l'usinage de la pièce est poursuivi, par mouvement relatif du faisceau laser (18) et de ladite pièce (3), d'une quantité de gaz de traitement par unité de temps qui est réglée sur une seconde valeur prédéfinie (Q2) stockée en mémoire, laquelle seconde valeur prédéfinie (Q2) est plus petite que ladite première valeur prédéfinie (Q1).

2. Procédé selon la revendication 1, **caractérisé par** la délivrance à la zone d'usinage (27), durant l'intégralité de la période de stabilisation, d'une quantité de gaz de traitement par unité de temps qui est réglée sur la première valeur prédéfinie (Q1).

3. Procédé selon l'une des revendications précédentes, **caractérisé par le fait que** la quantité de gaz de traitement par unité de temps, qui est délivrée à la zone d'usinage (27), est réduite progressivement après la période de stabilisation, pour passer de la première valeur prédéfinie (Q1) à la seconde valeur prédéfinie (Q2) pendant la durée d'une période de transition, laquelle période de transition représente, de préférence, entre 20 % et 60 % de la période de stabilisation, notamment entre 30 % et 50 % de ladite période de stabilisation.

4. Procédé selon l'une des revendications précédentes, **caractérisé par le fait que** la quantité de gaz de traitement par unité de temps qui est délivrée à la zone d'usinage (27) est réduite, après la période de stabilisation, sur la base d'une fonction de rampe stockée en mémoire.

5. Procédé selon l'une des revendications précédentes, **caractérisé par le fait que** le gaz de traitement est de l'hélium, de l'argon, du dioxyde de carbone et/ou de l'azote.

6. Procédé selon l'une des revendications précédentes, **caractérisé par le fait qu'**au moins un second gaz de traitement est délivré à la zone d'usinage (27), la quantité dudit second gaz de traitement, délivrée par unité de temps, étant réglée distinctement de la quantité du premier gaz de traitement par unité de temps.

7. Procédé selon l'une des revendications précédentes, **caractérisé par le fait que** le gaz de traitement est délivré à la zone d'usinage (27) conjointement à un ou à plusieurs autre(s) gaz de traitement, sous la forme d'un mélange de gaz de traitement, en vue de protéger ladite zone d'usinage (27) vis-à-vis de l'air environnant, et la quantité totale dudit mélange de gaz de traitement par unité de temps est réduite, après la période de stabilisation, sur la base des première et seconde valeurs prédéfinies (Q1, Q2).

8. Procédé selon l'une des revendications précédentes, **caractérisé par le fait que** le faisceau laser (18) agit en continu sur la pièce (3), au cours de l'usinage de ladite pièce, et effectue un usinage pour l'essentiel similaire, un cordon de soudure (16) cohérent étant exécuté en particulier.

9. Dispositif de commande (24) pour commander un système de réglage (23) qui délivre un gaz de traitement à une zone d'usinage (27), au cours d'un usinage mécanique de pièces au moyen d'un faisceau laser (18), un usinage de pièce s'opérant par mouvement relatif dudit faisceau laser (18) et de ladite pièce (3), **caractérisé par** la mémorisation, dans le dispositif de commande (24), d'au moins des première et seconde valeurs prédéfinies (Q1, Q2) de la quantité de gaz de traitement par unité de temps, la seconde valeur étant moindre, ainsi que d'une période de stabilisation ; et par le fait que le système de réglage (23) est commandé, au moyen dudit dispositif de commande (24), de façon telle que la quantité de gaz de traitement délivrée par unité de temps soit réglée sur la première valeur prédéfinie (Q1), au début de l'usinage, et que ladite quantité de gaz de traitement par unité de temps soit réglée sur la seconde valeur prédéfinie (Q2) après ladite période de stabilisation durant laquelle un usinage de pièce est poursuivi par mouvement relatif du faisceau laser (18) et de ladite pièce (3).

10. Installation (1) dévolue à l'usinage mécanique de pièces au moyen d'un faisceau laser (18), équipée d'un dispositif de commande (24) conforme à la revendication 9.

11. Programme d'usinage (29) dédié au pilotage d'un dispositif de commande (24) conforme à la revendication 9, **caractérisé par le fait que** ledit programme d'usinage (29) comprend des instructions de commande qui sont destinées au système de réglage (23) dévolu à l'amenée de gaz de traitement et provoquent la mise en œuvre d'un procédé, conforme à l'une des revendications 1 à 8, lorsque ledit programme d'usinage (29) se déroule sur une commande numérique (21) d'installation.

12. Produit de programme informatique (37) muni de moyens de codage adaptés à la mise en œuvre d'un procédé, conforme à l'une des revendications 1 à 8, lorsque ledit produit de programme informatique (37) est exploité sur une installation de traitement de données.
